# EUROPEAN PATENT SPECIFICATION

(11) **EP 4 314 128 B1**
(45) Date of publication and mention of the grant of the patent: **01.10.2025**
(21) Application number: 22720567.1
(22) Date of filing: 30.03.2022
(51) Int. Cl.: C08J 11/16, C08J 11/08

(54) **PROCESS FOR CONVERTING A WASTE MATERIAL COMPRISING CELLULOSE AND A NON-CELLULOSIC MATERIAL**
VERFAHREN ZUR UMWANDLUNG EINES ABFALLMATERIALS MIT EINER CELLULOSE UND EINEM ORGANISCHEN NICHTCELLULOSEMATERIAL
PROCÉDÉ DE CONVERSION DE DÉCHETS COMPRENANT UNE CELLULOSE ET UN MATÉRIAU NON CELLULOSIQUE ORGANIQUE

(30) Priority: 30.03.2021 EP 21166048
(43) Date of publication of application: 07.02.2024
(73) Proprietor: Cellicon B.V., 6827 BX Arnhem (NL)
(72) Inventor: O'CONNOR, Paul, 3871 KM HOEVELAKEN (NL); BABICH, Igor, 4124 AS Hagestein (NL); PICARO, Tony, 2581 AK The Hague (NL)
(74) Representative: Hoyng Rokh Monegier B.V.
(86) International application number: PCT/EP2022/058497
(87) International publication number: WO 2022/207757

(56) References cited:
- WO-A1-2016/087186
- WO-A1-2018/141911
- GB-A- 2 583 719

## Description

### BACKGROUND OF THE INVENTION

### 1. Field of the Invention

This invention relates to a process for converting a waste material to useful products wherein the waste material comprises cellulose and optional non-cellulosic material, in particular plastic material.

### 2. Description of the Related Art

Waste materials are often diverse and complex mixtures that are difficult to recycle or convert to useful products. Because of the complexity and diversity of the waste materials and the price of recycling, at present waste materials are for the largest part disposed in landfills or incinerated resulting in the pollution of the land and pollution of the air with greenhouse gasses in the form of for instance CO₂, CH₄ and N₂O and other non-desired pollutants as for instance NOₓ, SOₓ, H₂S, NH₃, and chlorinated compounds.

In view of the environmental problems and climate change, currently many processes are being developed to convert waste material into value-added products avoiding the detrimental environmental effects caused by air-, land- and water pollution. The big challenge in this development is not only dealing with the complexity of the different components in the waste material, but also in providing a process that is able to handle diverse different types of waste materials in a relatively simple way resulting in value added products and with an attractive process economy.

WO2020/252523 describes a process for separation and recycling of blended polyester and cotton textiles (or other regenerated cellulosic fibre textile fabric) wherein the textiles are shredded and mixed with an aqueous solution of sulfuric acid and water, before being heated and pressurized in a sealed reactor, resulting in a liquid comprising cellulose particles and polyester fibre. The output is dewatered, with free liquid filtered to recover any cellulose particles present therein. The dewatered fibre mix is washed with a liquid wash before being dewatered and again free liquid being filtered to recover any cellulose particles. The recovered cellulose particles and the polyester fibres present in the washed dewatered fibre mix are output for re-use. This process has several disadvantages. One disadvantage is that it can be applied only to a precisely defined waste material of polyester and cotton textiles. The process also produces waste streams (acid and washing solutions) that pose an environmental hazard, the cellulose is degraded for a large part resulting in lower added value products and the polyester fibers often have too low quality compared to freshly prepared polyester fibers that they cannot be re-used.

The above described problem that the separated products have too low quality to be re-used is addressed in processes that chemically convert waste materials to useful products at high temperatures and pressures, for example fast pyrolysis, catalytic pyrolysis, gasification plus Fischer Tropsch, and hydrothermal liquefaction. These processes in general aim to convert the waste materials to biofuels, waxes, carbon, CO₂ and hydrogen.

In WO2010053989 O'Connor describes the thermal catalytic cracking of solid biomass using an intimate mixture or composite of the solid particulate biomass material and a particulate catalytic material such as mixed metal oxides, layered cationic materials, and hydrotalcite-like materials.

Cao e.a. describe in Waste Management 100 (2019) 138-150, Hydrothermal carbonization of biogas digestate. Digestate is a residue from the biogas production by anaerobic digestion of biomass and comprises mixture of undigested biomass and microbes. The digestate is an organic waste product and is usually applied to farmlands as fertilizer. However, the presence of heavy metals, pathogens, indicator organisms, and high loads of nitrogen in the digestate limit its land application. The biomass can be crop waste, manure, organic household waste. Cao describes hydrothermal carbonization (HTC) to convert low-value wet biomass to a solid product termed hydrochar by hydrothermal carbonizing a 15 wt% dry organic matter weight in water in an autoclave at temperatures ranging between 170 and 250 °C. However, one of the challenges for the hydrothermal carbonization process is that it requires high operating pressures, which typically can range between 100 - 350 barg.

Heidi S. Nygard and Espen Olsen, describe in a review article in the International Journal of Low-Carbon Technologies 2012, 7, 318-324 a Review of thermal processing of biomass and waste in molten salts for production of renewable fuels and chemicals. Thermal conversion in molten salts is fairly recent development. The use of molten salts is described for the pyrolytic conversion of cellulose in eutectic mixture of lithium, potassium and sodium carbonates at temperatures ranging from 851 to 962°C.

Boyi Zhang e.a. describe in J. Mater. Chem. A, 2019, 7, 22912 Molten salts promoting the "controlled carbonization" of waste polyesters into hierarchically porous carbon for high-performance solar steam evaporation. Herein, hierarchically porous carbon (HPC) having an irregular, inter-connected nanoparticle morphology is synthesized through "controlled carbonization" of low-cost waste poly(ethylene terephthalate) (PET) using ZnCl₂/NaCl eutectic salts at 550°C. The HPC is used to harvest solar energy for diverse applications such as distillation, desalination, and production of freshwater.

In WO2018141911 O'Connor describes a carbonization process for converting a hydrocarbon feed, for example oils or carbohydrates, are converted into hydrogen and a carbon phase, said process comprising the steps of contacting hydrocarbons with a molten salt at high temperature wherein the hydrocarbons are cracked to produce hydrogen and a solid or liquid carbon phase which are separated from the molten salt. The hydrogen is used to react with CO₂ sequestered from air to produce hydrocarbons and to reduce greenhouse gas CO₂ in the atmosphere.

WO 2016/087186 discloses a process for the conversion of ligno-cellulosic biomass to platform chemicals such as fuel additives or fuel replacement. The process comprises the steps of contacting the ligno-cellulosic biomass with a molten salt hydrate and hydrolyzing the cellulose to form a solution of partially hydrolyzed cellulose, separating the partially hydrolyzed cellulose and converting the partially hydrolyzed cellulose in a thermo-catalytic process to platform chemicals, for example to deoxygenated saccharides. The process does not provide a sufficiently high yield of useful products.

GB2583719 describes the separation of cellulose from a feedstock and non-cellulosic plastic material e.g. polyester by a sequence of steps comprising a first and a second solvent and a first and second temperature to dissolve the cellulose and removing the first and second solvent system containing the dissolved cellulose. The first solvent comprises an amide, preferably 1,3-dimethyl-2-imidazolidinone, and the second solvent is an ionic liquid comprising an acid and a base, preferably a protic ionic liquid such as a mixture of 1,1,3,3-tetramethylguanidine and acetic acid which solvent system dissolves cellulose but not other polymers.

However, the known processes have several disadvantages. Carbonisation step is obviously always done at lowest possible oxygen level to avoid losing carbon as CO₂ and losing hydrogen as water. An important problem of high temperature conversion of waste materials such as biobased waste materials is that the waste material comprises a lot of compounds having oxygen atoms and thus generates a lot of CO₂ and water at the expense of precious hydrogen. Also, these processes have difficulties to deal with heteroatoms like Sulphur, nitrogen and halogens, which consume precious hydrogen and produce toxic exhaust gasses. Apart from that, many prior art processes use very high temperatures and/or pressures which leads to high energy consumption and process complexity.

There remains a desire for a process whereby waste material can be converted to value-added products that does not have one or more of the abovementioned disadvantages; in particular a more generally applicable, cost-effective process and resulting in high value-added products that can be used to convert diverse waste materials into value added products. Given the complexity of the waste streams the process should preferably also be able to avoid detrimental effects of hetero atoms like amongst others Sulfur, Nitrogen, Oxygen and Chlorine compounds which can cause environmental pollution (SOₓ, NOₓ and Chlorine compounds) but can also diminish the yield of valuable hydrogen formed.

### BRIEF SUMMARY OF THE INVENTION

The present invention addresses these problems by providing a process for converting a waste material comprising cellulose and optional non-cellulosic material comprising the steps of
I. Contacting the waste material with a first molten salt solvent at a first temperature below 125°C, preferably below 100°C and dissoluting the cellulose,
II. Separating the obtained cellulose solution into two fractions comprising
   a) Fraction II.a) comprising a solution of cellulose in the molten salt solvent and optional dissolved non-cellulosic material,
   b) Fraction II.b) comprising non-dissolved material,
III. Adding anti-solvent to precipitate cellulose from Fraction II.a and separating into
   a) Fraction III.a) comprising precipitate cellulose,
   b) Fraction III.b) comprising used first molten salt solvent comprising the salt, the anti-solvent, cellulose degradation products and optional dissolved non-cellulosic material,
IV. Preferably evaporating anti-solvent from Fraction Ill.b to form a concentrated molten salt Fraction Ill.bc,
V. Providing a carbonization feed comprising Fraction Ill.b or Fraction Ill.bc and/or Fraction II.b) and carbonizing said feed in a second molten salt solvent at a second temperature above 150°C, preferably above 200°C, more preferably above 300°C, and preferably lower than 600°C, more preferably lower than 500°C to form solid carbon and hydrogen,
VI. Separating the formed solid carbon to form
   a) Fraction VI.a) comprising solid carbon,
   b) Fraction VI.b) comprising the used second molten salt solvent.

The process of the invention presents one or more advantages compared to prior art processes of an increased yield of hydrogen, lower temperature and pressure of operation and lower energy consumption, more complete conversion of the waste material feed to useful products such as carbon and hydrogen and very low residual waste streams, high flexibility in dealing with different types of waste streams in particular also waste streams comprising plastic as described in more detail below.

The oxygen content of the waste stream is greatly reduced in the process of the invention by selectively removing the cellulose which contains a lot of oxygen which results in value creation from the obtained cellulose nanocrystals as well as a great reduction in CO₂ emission and reduction in consumption of hydrogen in H₂O formation, the carbon formed in the carbonization step captures heteroatoms Nitrogen and Sulphur leading to reduced emissions of NH₃, as well as N₂O and NOₓ emissions, and H₂S and SOx emissions, and overall reduced hydrogen consumption. The cellulose removal at low temperature and the carbonization at high temperature can be done in the same molten salt, though preferably at different water contents, which reduces complexity of the process. The carbonization temperature and pressure is low compared to prior art conversion processes, which is a great advantage in reducing energy cost of the process and in reducing complexity. Good carbonization results were even obtained in converting biomass and plastics in 200 to 400°C range. Additionally, the heteroatoms present in the waste material for example in plastics, for example chlorine in PVC, can be captured in the molten salt solvent, which reduces toxic emissions of halogens and hydrochloric acid and reduces hydrogen consumption.

### DESCRIPTION OF THE DRAWING

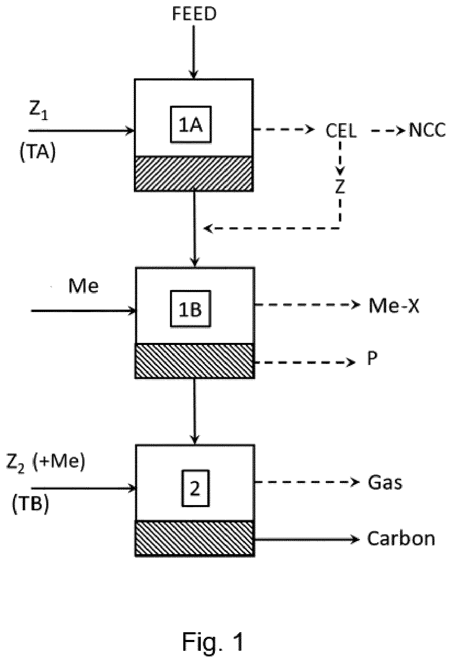

The features and advantages of the invention will be appreciated upon reference to Fig. 1 showing a schematic representation of one embodiment of the process of the invention showing a first low temperature step 1A, wherein a feed (FEED) is contacted with a first molten salt solvent Z1 at a first temperature T_{A} forming a cellulose solution CEL which is separated from the molten salt solvent to recover Nano-structured crystalline cellulose NCC and wherein the used molten salt solvent Z is fed back into the process to (optional) step 1B wherein metal compound is added to react with heteroatom compounds X present in the molten salt solvent and wherein optional non dissolved components P and the reaction product Me-X of the metal compound and heteroatom compounds X are separated, followed by carbonization step 2 at high temperature T_{B} in second molten salt solvent Z₂ to form gas, including hydrogen gas, and solid carbon wherein optionally further metal compound Me is added to react with heteroatom compounds X formed during carbonization in the molten salt solvent. It is noted that Fig 2 shows a white top fraction and a hatched bottom fraction but this is only schematic and does not reflect an actual position of the fraction in a reactor. For example, a Fraction Il.b comprising lignin and plastics will float in the molten salt.

### DETAILED DESCRIPTION OF THE INVENTION

The process can be applied to various different types of waste material. The waste material can be a municipal waste mix including plastics of various sorts. It can be biobased waste from farming and forestry, for example manure, residue plant material from crops like bagasse, wood etc. The waste material can be the residue of recycling processes like the mixed paper/plastic stream from paper recycling or digestate from biogas production. Waste materials can also be waste fabricated articles comprising different components such plastics comprising additives like halogen flame retardants, mixtures of cellulose and plastic material; for example, textiles made of cellulosic and plastic fibers like polycotton, polymer coated paper or cardboard material or paper reinforced plastic composite materials. It is noted that the term plastic material herein is used for all synthetic polymer materials, including thermoplastic and thermoset polymer materials. Typical plastic materials are polyesters like polyethylene terephthalate, polyolefins like polyethylene and polypropylene, polystyrene, polyvinylchloride, polyvinylfluoride, polyamide, but also natural or synthetic rubbers that can be thermoplastic or crosslinked. The waste stream comprises cellulose and optional non-cellulosic material. The non-cellulosic material may be organic non-cellulosic material, such as bio-organic or synthetic organic materials, in particular biopolymers or synthetic polymers. Inorganic materials in the waste stream, such as metals, glass, rocks, sand, concrete etc., e.g. as may occur in Municipal Solid Waste, are preferably removed before or during process step I of the invention.

The process comprises as a first step contacting the waste material comprising cellulose and optional non-cellulosic material with a first molten salt solvent at a first temperature below 125°C, preferably below 100°C, more preferably below 90 or even below 80 °C and dissoluting the cellulose. However, several feed preparation steps may precede this step, such as sorting, removing mineral contaminants, cleaning, shredding to small parts typically between 1 and 20 mm and drying. The temperature in dissolution step I is can be chosen in wide ranges and is chosen high in view of speed of dissolution but preferably below 125°C to prevent too much carbonization already in the first step and to prevent degradation of the cellulose which comes out of the process as a valuable product.

An advantage of the process of the invention compared to conventional processes is that the cellulose can be removed from the waste material at relatively low temperatures resulting in a low degree of hydrolization and degradation, in particular when the molten salt solvent is free of proton acid and comprises a proton scavenger. It was further found that the molten salt hydrate can be used as a solvent for carbonization despite the fact that it is a hydrate. A big advantage of carbonization in the molten salt hydrate is that the water vapor pressure is very low and carbonization can be achieved at lower temperatures and much lower pressures than hydrothermal carbonization wherein pressures typically ranges between 100 - 350 barg whereas in the process of the invention the pressure preferably is below 100 barg and preferably below 10 barg.

In this process the first molten solvent preferably is a molten metal salt, more preferably a molten metal halide salt wherein the halide preferably is bromide or chloride and wherein the metal preferably is Zn, Al or Sb. Suitable molten metal salts are chosen from the group consisting of ZnCl₂, ZnBr₂, AlCl₃, SbCl₃, their hydrates and the blends thereof. A suitable example of a blend is AlCl₃/SbCl₃. However, more preferably a molten ZnCl₂ or ZnBr₂ hydrate salt is used and most preferably ZnCl₂.4H₂O. The molten salt hydrate, preferably ZnCl₂ or ZnBr₂ hydrate, comprises 40 - 90 wt.%, preferably 50 - 85 wt.%, more preferably 65 - 85 wt.% salt, wherein wt% is relative to the total weight of salt and water. Preferably the second molten is a molten salt hydrate with lower water content than the first molten salt hydrate or even an anhydrous molten salt as explained below. Optionally, the first molten salt hydrate is formed in step I by adding a molten salt or a molten salt hydrate with a water content that is lower than the water content of the first molten salt hydrate and hydrating that with water contained in the waste material. The advantage is that the waste material does not need to be dried or does not need to be completely dried before the start of the conversion process.

When the waste material feed is wet it should be dried to such extent that the total water content in the waste material feed and molten salt solvent is in the above indicated preferred ranges. One advantage of using a molten salt hydrate as the molten salt solvent is that the waste material feed does not need to be dried or not completely dried when adding the dry metal salt or metal salt with low water content and forming the metal salt-hydrate with the preferred water content in-situ with the water from the feed in contacting step I.

The first molten salt is chosen in view of recovering the cellulose from the waste stream and this can be same or different form the second molten salt solvent which is chosen in view of the carbonization. In a highly preferred embodiment, the second molten salt solvent comprises the same molten salt as the first molten salt solvent such that the cellulose removal steps at low temperature and the carbonization steps at high temperature can be done in the same or substantially the same molten salt solvent, which reduces complexity, operational cost of the process. With substantially the same molten salt solvent is meant that the same salt is used in the first and second molten salt solvent. Differences between the first and second molten salts solvent may exist in water content and in the presence of different contaminants, but both the first and second molten salt solvent both comprise an amount of the same salt of at least 40 wt% preferably at least 50 wt% more preferably at least 60 wt%.

Typically it is preferred that the first molten salt solvent is a molten salt hydrate and the second molten salt solvent comprises a lower water content than the first molten salt or is even substantially anhydrous. Substantially anhydrous means having no water or a very low water content preferably below 5, 2 or even below 1 wt%. The choice depends i.a. on the composition of the waste feed; in particular on the resulting composition of the carbonization feed in step V. A lower water content is preferred in step V when the carbonization feed comprises materials that are more difficult to carbonize and require higher carbonization temperatures. It is most preferred that in the process the first molten salt solvent is a molten salt hydrate and the second molten salt solvent is the same molten salt with a lower water content than the first molten salt solvent or is substantially anhydrous. The advantage of using the same molten salt in the first and second molten salt solvent is that it can be used in the entire process and recycled from one to another process step by changing the water content and optionally after purification.

So, milder carbonization conditions can be chosen in case A wherein the carbonization feed comprises fraction Ill.b (which may comprise cellulose degradation products optional anti-solvent and optional dissolved non-cellulosic material) and/or fraction Il.b (which may comprise lignin) but comprises substantially no plastic material. In that case A, the carbonization temperature preferably is below 400°C, preferably below 350°C, but can also be below 300°C or even below 270°C depending on the nature of the carbonization feed and if carbonization catalyst can effectively be used. At low carbonisation temperatures the second molten salt solvent in step V can be a molten salt hydrate. However, at carbonisation temperatures above 250 - 300°C, a molten salt solvent such as Zinc-chloride is typically anhydrous in open reaction systems and atmospheric conditions. In view of the balance between speed of conversion and energy economics the temperature is preferably between 300 and 400°C. The advantage of choosing a hydrated molten salt and/or relatively low carbonization temperatures in step V is that the process uses less energy. In case it is cumbersome to know or adjust the waste feed composition it is easiest to choose anhydrous molten salt in step V as this converts all types of organic waste material.

In case B wherein the carbonization feed comprises fraction Il.b comprising plastic material, the second molten salt solvent comprises a lower water content than the first molten salt solvent or is preferably a substantially anhydrous molten salt and the carbonization temperature is preferably above 300°C, more preferably above 350°C or even above 400°C and most preferably between 400 and 500 °C.

In case C wherein the waste stream comprises both lignin and plastic waste material both will end up in fraction Il.b, and the lignin and plastic material can either be carbonized together as in case B or, more preferably in view of energy consumption, the plastic material is separated from the lignin and the separated lignin is carbonized in step V as in case A and the separated plastic material is carbonized in step V as in case B. The plastic material can be separated from the lignin preferably by one or more methods using particle size and/or density difference between lignin and plastic material.

Process Step II comprises separating the obtained cellulose solution into two fractions comprising Fraction II.a) comprising a solution of cellulose in the molten salt solvent and optional dissolved non-cellulosic material and Fraction II.b) comprising non-dissolved material. The separating can be done by filtration, by centrifugation and/or by separation of a phase separated layer. An example of a non-cellulosic material is lignin which phase separates from the molten salt solvent when dissolving wood and can be easily separated by removing the phase separated layer. An example of dissolved non-cellulosic material is hemicellulose, which is considered not to be cellulose because it does not precipitate to crystalline cellulose and preferably is at least partially hydrolyzed in the molten salt solvent to stay dissolved in solution in the molten salt solvent. Plastic waste components can be separated suitably by filtration and/or centrifugation.

Step III of the process comprises adding anti-solvent to precipitate cellulose from Fraction Il.a and separating into Fraction III.a) comprising precipitate cellulose and Fraction III.b) comprising used first molten salt solvent comprising the salt, the anti-solvent, cellulose degradation products and optional dissolved non-cellulosic material. Anti-solvents for cellulose precipitation from molten salt solvents are known in the art. Suitable antisolvents, in particular for ZnCl₂ and ZnBr₂ molten salts, are C1 to C8 alcohols and ketones, in particular the alcohols of the group of straight chain and branched chain C1 to C4 alcohols, such as methanol, ethanol, propanol, and iso-propanol. Suitable ketones include the C3 to C5 ketones such as acetone and methylethylketone (MEK). Preferred organic anti-solvents agents are acetone, ethanol, t-butyl alcohol. Solid separation and washing can be performed either by centrifugation or by filtration. Organic anti-solvent could in in principle stay in fraction Ill.b to be carbonized in step V but is preferably evaporated in step IV.

However, most preferably water is used as anti-solvent and is preferably added in an amount to dilute the salt concentration to reduce solvent power until precipitation of cellulose. Molten salt of ZnCl₂ is preferably diluted to a concentration between 10 and 30 wt.% (relative to the total weight of salt and water), preferably between 15 and 25 wt.% and most preferably around 20 wt.%. Preferably, water is added to dilute to a concentration of at least 10, preferably at least 15 wt.% to avoid the precipitation of dissolved sugar oligomers and monomers, which beneficial for the purity of the cellulose precipitate. In the process of the invention the small sugars oligomers and monomers remain dissolved in the used first molten salt solvent Fraction III.b) and are carbonized in step V. Preferably the anti-solvent from Fraction Ill.b is evaporated in step IV to form a concentrated molten salt Fraction Ill.bc, which preferably is used in the carbonization feed to form the second molten salt solvent.

In a particularly preferred embodiment of the process of the invention, in step I.a) the waste is first contacted with a molten salt solvent A which is an aqueous solution comprising 40 - 65 wt% ZnCl₂ in water, whereby the amorphous cellulose phase is preferentially dissolved over the crystalline cellulose phase having an XRD type I structure, and wherein in step I.b) the obtained crystalline cellulose having an XRD type I structure is contacted with molten salt solvent B comprising between 65 and 90 wt% ZnCl₂ in water to produce delaminated cellulose having an XRD type II structure, wherein the molten salt solvent B and preferably also the molten salt solvent A are free of proton acid and preferably comprise a proton scavenger and wherein the temperature in step I.a) and I.b) is preferably below 80°C, more below 70°C, 60°C or even below 50°C. This embodiment provides valuable nano-crystalline cellulose material type II of high crystallinity, high purity and which is thermally stable (little discoloration) so it can be used in many applications. Reference is made to WO2017/055407 and WO2020/212616 describing details of the process to separate nanocellulose in proton free Zinc-chloride molten salt solvent.

In a particularly preferred embodiment of the invention the second molten salt solvent comprises the same salt as the first molten salt solvent and comprises in step III) precipitating the dissolved Cellulose from the first molten salt solvent by adding anti-solvent; in step IV) heating Fraction Ill.b and evaporating the anti-solvent from Fraction Ill.b to form the concentrated used molten salt solvent Fraction Ill.bc, and; in step V) further heating the concentrated used molten salt solvent Fraction Ill.bc, optionally mixed with the Fraction II.b) and optionally with additional molten salt to form the carbonization feed for carbonizing in step V) and preferably further comprising a step VII comprising recycling, after optional purification, the used second molten salt solvent for use as- or for use in the first and/or second molten salt solvent. In this process it is particularly preferred that the first molten salt solvent is molten ZnCl₂₋hydrate or ZnBr₂₋hydrate wherein in step III) the dissolved Cellulose is precipitated from the first molten salt solvent by diluting with water, preferably in an amount to dilute to a ZnCl₂ or ZnBr₂ concentration between 10 and 30 wt.% relative to the total weight of the molten salt and water and; in step IV) evaporating the water, preferably at a temperature above 100°C, to form the concentrated molten salt Fraction Ill.bc.

For example, in case the waste stream comprises wood comprising cellulose, hemicellulose and lignin, the lignin forms phase separation from the first molten salt solvent which can be separated, the hemicellulose dissolves and will be at least partially hydrolyzed and stays dissolved in the used first molten salt solvent. The cellulose is dissolved whereby some cellulose hydrolysis and degradation may occur but that can be kept to a minimum by choosing mild conditions as described above. The dissolved cellulose is precipitated and separated in step III to provide a useful valuable product. The cellulose degradation products and non-cellulose components like the at least partially hydrolyzed hemicellulose stay dissolved in the used molten salt solvent which is also provided to the carbonization feed to be carbonized in step V. The separated lignin fraction can be used to isolate lignin as a useful product and/or can be provided in the carbonization feed to be carbonized in step V. In this way the residue of the wood recycling in the process of the invention is minimized and the useful product yield is optimized.

In case the waste stream comprises cellulose and as non-cellulosic material plastic material, the cellulose is first dissolved in step I and non-dissolved plastic will be separated in step II forming Fraction Il.b which is then either re-used if the quality of the plastic permits and/or is mixed with used first molten salt solvent Fraction Ill.b or Ill.bc and optionally with additional second molten salt, to be carbonized in the carbonization step V.

In step V a carbonization feed is provided comprising Fraction Ill.b or Ill.bc and/or Fraction II.b). In a most preferred embodiment, as described above, the second molten salt is substantially the same as the first molten salt and Fraction Ill.b or Ill.bc is combined with Fraction II.b) optionally with the additional fresh first molten salt if needed and heated to the carbonization temperature.

It is also possible, though less preferred, that the second molten salt solvent in carbonization step V is different from the first molten salt solvent. For example, the first molten salt solvent is the preferred molten Zinc-chloride or bromide hydrate salt and the second molten salt solvent is not a salt hydrate, for example a eutectic salt mixture. This is however preferably used only in exceptional cases for exceptional waste streams in addition to the above preferred process, for example when exceptionally high temperatures are required in carbonization step V; for example higher than 500°C. In a practical situation, a waste recycling installation comprises means to switch from using a second solvent in step V that is the same or different from the first molten salt solvent and separate recycling means. In this case, the Fraction Ill.b or Ill.bc, comprising the used and contaminated first molten salt solvent, is separately carbonized in a step V and a separate carbonization feed is prepared by mixing the separated non-dissolved Fraction II.b) with the different second molten salt solvent which is then separately carbonized in step V. The first molten salt solvent and the different second molten salt solvent are also separately purified to recover the first and second molten salt solvent.

The carbonization feed is carbonized in the second molten salt solvent at a second temperature above 150°C, preferably above 200°C, more preferably above 300°C and preferably lower than 600°C or even lower than 500°C to form solid carbon and hydrogen. Lower temperatures are preferred in view of energy consumption and selectivity towards conversion products formed whereas higher temperatures are preferred in view of yield and speed. The optimum balance can be found by the skilled person in each case depending on waste composition and end desired products. Then, in step VI, the formed solid carbon is separated to form Fraction VI.a) comprising solid carbon and Fraction VI.b) comprising the used second molten salt solvent.

In case the carbonization feed in step V comprises heteroatoms from non-cellulosic materials in the waste material or from cellulose degradation products, at least part of the heteroatoms Nitrogen and Sulphur if present are concentrated in the carbon formed in step V and removed in step VI with the solid carbon. Preferably however, also a reactant is added before or during carbonization step V to convert heteroatom-containing compounds to a reaction product that can be separated from the first or second molten salt solvent, wherein the reactant preferably reacts with the heteroatom compounds to form a salt that can be separated from the molten salt solvent, preferably by precipitation or by phase separation. This preferably takes place in the carbonization step where non-cellulosic materials comprising heteroatoms degrade and generate heteroatom compounds that can react with the reactant.

In case the second molten salt solvent is a metal halogenide and the carbonization feed comprises non-cellulosic material comprising halogenide heteroatoms wherein the halogenide is the same halogenide as in the metal halogenide of the second molten salt solvent , the reactant preferably is a metal oxide wherein the metal is the same as the metal in the metal halogenide of the second molten salt solvent. In that case there is no need for the reaction product to be separated. For example, as described above, in a preferred embodiment the second molten salt solvent is Zinc-Chloride. If the carbonization feed comprises plastic waste material comprising chloride such as PVC, the carbonization will generate Chlorine (Cl₂) which can be converted in step V to Zinc chloride using Zinc Oxide as the reactant.

The reactant preferably is a metal compound, preferably a Metal, Metal Oxide or Metal hydroxide, more preferably Zinc Oxide, Magnesium Oxide, Iron Oxide or Nickel Oxide and wherein the formed heteroatom compounds comprise one or more of halogens, CO₂, SOₓ or NOₓ which react to form one or more of metal-halogenides, metal-carbonates, metal-sulfates, or metal- nitrates. So, oxygen containing compounds degrade to generate CO₂ which can be captured by metaloxides (eg Mg-oxide) to produce metal-carbonates. PVC or halogen-based flame retardants in plastics degrade in the hot molten salt to produce halogens which react for example with Zinc-oxide to produce Zinc-chloride, which is the preferred molten salt and can stay in the zinc-chloride molten salt. In case the contaminant heteroatom comprises Br or F the reactant Zinc-oxide forms reaction product is ZnBr₂ or ZnF₂ In that case the corresponding ZnBr₂ or ZnF₂ hydrate salt can be used as molten salt solvent. However, also Zinc-chloride hydrate molten salt solvent can be used as the ZnBr₂ or ZnF₂ reaction products formed do not substantially affect the solvent quality of the zinc-chloride hydrate molten salt solvent. The ZnCl₂ may need to be diluted with water if the concentration ZnCl₂ (or ZnBr2, ZnF2) gets too high. Optionally, bromides can be removed by addition of MgO. At the end of process Zn can be recovered by contacting Zn halogenide with NaOH to precipitate Zn(OH)₂. Sulphur containing compounds degrade to produce SOₓ which can be reacted with metal oxide to produce metal-sulfates or react directly to produce Metal sulfides. The skilled person can choose the reactant such that it can either stay or can be separated from the molten salt solvent used.

Preferably, a solid carbon source or a precursor thereof is added to the carbonization feed in step V) as a carbonization seed wherein preferably the amount of solid carbon source or a precursor thereof is between 0.1 and 10 wt.%, preferably between 0.1 and 5 or 3 wt.% relative to the total weight of the carbonization feed. The precursor is carbonized in step V) to form the carbonisation seed. The seed will act as a template or the deposition of the formed carbon during the carbonization by which the quality and the yield of the formed carbon can be influenced and improved.

In view of lowering carbonization temperatures and/or to enhance hydrogen yield, the second molten metal salt solvent in step V) may further comprise one or more catalyst metals, preferably dehydrogenation catalyst metals, different from the metal in the molten salt, preferably chosen from the group of Ni, Fe, Cu or Zn, preferably in the form of a metal-organic complex like metal-alkyls, metal-oxides or a metal-chloride complex. It is generally preferred to keep amounts low ; preferably in an amount of less than 10, preferably less than 5 or even less than 3 mole% of the metal in the molten salt and wherein optionally the dehydrogenation catalyst metals are supported on a solid carbon source or a precursor thereof. In particular in the most preferred wherein the first and second molten solvent are zinc-chloride hydrate molten salt as described herein, a dehydrogenation catalyst is not even necessary and less preferred in view of recyclability of the molten salt solvent and use in the cellulose removal steps I - IV and is present in an amount less than 3 mole% or even less than 1 mole % of the metal in the molten salt or even 0 mole %.

The solid carbon source mentioned above as seed or as support is preferably carbon fiber, carbon nanofiber or carbon nanotube and the precursor of a carbon source preferably is lignin or cellulose. Herein, the cellulose precipitate, more preferably the highly crystalline XRD type II nano-crystalline cellulose (NCC) obtained in step III.a) as described above, can be used. In a special embodiment, the NCC carbon precursor is formed by spinning or extruding the cellulose solution Fraction Il.a and precipitating in step III, for example by quenching in a water bath, to form aligned NCC spun- or extruded fibres and using these as carbon precursor seed in carbonization step V. Also plastic can be used as the solid carbon precursor or carbonized plastic can be used as carbonisation seed.

In step VI the solid carbon formed is separated to form Fraction VI.a) comprising solid carbon and Fraction VI.b) comprising the used second molten salt solvent. The solid carbon is a useful product that can be valorized. The used second molten salt solvent is cooled and recycled for use in the process. Alternatively, instead of cooling, after carbonization step V the hot carbonized feed obtained in step V is not cooled but contacted with waste material including biomass and/or plastics. The carbon in the second molten salt catalyze carbonization as described.

The separated solid obtained in step VI.a can be further processed in a separate step at temperatures above 800°C to enhance the formation of higher quality carbon materials. The separated solid carbon can be used to prepare carbon sol fertilizer, carbon black, carbon fibers, carbon nanofibers or precursors thereof.

The above described process for the removal of heteroatoms from a molten salt is not limited to the process of the present invention but can be applied more generally, for example to a waste stream comprising plastic but not comprising cellulose, wherein cellulose dissolution and separation steps I - IV are not necessary, or to a process wherein a waste stream comprising plastic and cellulose but wherein cellulose dissolution and separation steps I - IV are economically or practically not of interest, for example if the amount is too low, and the cellulose is also carbonized in step V.

Therefore, in another aspect, the invention also generally relates to a process for removing heteroatoms from a molten salt solvent, wherein the molten salt preferably is, as described above, a molten metal halide salt wherein the halide preferably is bromide or chloride, most preferably a molten ZnCl₂ hydrate salt. This process is particularly advantageous for the recycling of waste materials comprising plastic comprising heteroatoms like for example PVC.

Therefore, in a particular embodiment of this invention, the invention relates to a process for converting plastic comprising heteroatoms comprising carbonizing the plastic comprising heteroatoms in a molten salt solvent at a temperature above 150°C, preferably above 200°C, more preferably above 300°C and preferably lower than 600 or 500°C, wherein a reactant is added to the molten salt solvent to convert heteroatom compounds formed during carbonization of the plastic to a compound that can be separated from the molten salt solvent or, in case the molten salt solvent is a metal halogenide, the converted compound is a metal halogenide that is not separated from the molten metal salt solvent.

The molten salt solvent preferably is a molten salt solvent as described above; a molten metal halide salt wherein the halide preferably is bromide or chloride and wherein the metal preferably is Zn, Al or Sb, and which is preferably chosen from the group consisting of ZnCl₂, ZnBr₂, AlCl₃, SbCl₃, their hydrates and the blends thereof, preferably a AlCl₃/SbCl₃ blend and most preferably a molten ZnCl₂ hydrate salt. The carbonization is preferably done at higher temperatures above 400°C. At the high carbonization temperatures the molten salt is preferably anhydrous.

The reactant preferably is a compound as described above, preferably a metal compound, preferably a Metal, Metal Oxide or Metal hydroxide, more preferably Zinc Oxide, Magnesium Oxide, Iron Oxide or Nickel Oxide and wherein the formed heteroatom compounds comprise one or more of halogens, CO₂, SOₓ or NOₓ which react to form one or more of metal-halogenides, metal-carbonates, metal-sulfates, or metal- nitrates. In case the molten metal salt solvent is a metal halogenide, reaction of halogen with the corresponding metal-oxide produces a metal-halogenide that does not need to be separated from the metal molten salt solvent; preferably in a zinc-chloride molten salt solvent Cl₂ is reacted with Zinc-oxide as reactant to form Zinc-chloride. An alternative is to convert heteroatom-containing compounds to a reaction product that can be separated from the molten salt solvent, wherein the reactant preferably reacts with the heteroatom compounds to form a salt that can be separated from the molten salt solvent, preferably by precipitation or by phase separation.

The molten salt solvent herein preferably comprises a solid carbon source or a precursor thereof as a carbonization seed as described above, and preferably comprises a dehydrogenation catalyst as described above to catalyze the carbonization of the plastic. Herein carbon and hydrogen atoms in the plastic are converted to solid carbon and hydrogen gas, the nitrogen and sulfur atoms in the plastic are concentrated in the formed solid carbon and other heteroatoms are captured by the reactant.

Inorganic materials in the waste material, such as metals, glass, rocks, sand etc. are preferably removed before applying the process of the invention, but can also be removed during step I of the process. It is a particular advantage of the process of the invention that the molten salt solvent is very suitable as medium for separation based on density because the molten salt solvent has a relatively high density: zinc-chloride has a density of about 2.9 gr/cm³, and the water content of the molten salt solvent can be adjusted to lower density, preferably below 2.5 gr/cm³ so that the density of the molten zinc-chloride solvent will facilitate a density separation process to separate the inorganic fractions from the organic fractions. Then, if needed, molten salt can be added (or solid salt is added and molten) which contains less or no water (anhydrous) to lower the water content in the first molten salt hydrate to allow cellulose dissolution in step la. Thus, in the process of the invention the removal of inorganic materials can be done in the same molten salt solvent that is used in the rest of the process wherein only water content may need to be adjusted. This is a significant advantage over known dense medium separation (DMS) techniques wherein a separate separation step is used to separate heavier fractions which sink from lighter fractions which float, using as the dense medium water wherein large amounts of salt are dissolved.

In a particular embodiment of the process of the invention the waste material also comprises inorganic material and organic non-cellulosic material, preferably comprising synthetic polymers and/or biopolymers, wherein the waste material is contacted before and/or during step I with a molten salt solvent to dissolve the cellulose, whereby the inorganic material and organic non-cellulosic material are physically separated based on density wherein the inorganic material having a higher density than the molten salt solvent sinks and the organic non-cellulosic material having a lower density than the molten salt solvent floats.

In a particular aspect, the invention also relates to the use of a molten salt solvent, in particular a molten salt solvent according to anyone of the preferences described above, as a dense medium to separate based on density a waste material into an inorganic fraction, a fraction soluble in the molten salt solvent, preferably cellulose, and a non-soluble organic fraction preferably comprising biopolymers or synthetic polymer materials. The molten salt solvent is used as medium for fractionating the various components based on their density. The molten salt solvent herein typically has a density (specific gravity SG) of about 2.5 gr/cm³ in order to separate organics from inorganics. The density of separation can be closely controlled, within a relative density of 0.2 gr/cm³ and can be maintained for long periods. The separating density can be changed at will and fairly quickly to meet varying requirements. The waste material is introduced into separating vessels within which the separation take place. These can either be static (where gravity is the driving force behind the separation) or dynamic (where centrifugal forces are the driving force and the particles experience multiple g forces).

### DETAILED DESCRIPTION OF ILLUSTRATIVE EMBODIMENTS

The following is a description of certain embodiments of the invention, given by way of examples only and with reference to the drawings.

Referring to FIG. 1, a schematic view is shown of the process of the invention showing a first step 1A wherein a waste feed is mixed with in solvent Z₁ at low temperature TA and wherein cellulose product CEL is separated, an optional step 1B wherein the remaining waste stream is treated by adding metal compound Me in solvent Z₂ to react with contaminants X in the waste stream and wherein the reaction product Me-X is removed from the waste stream and optionally also remaining solid components P are removed and step 2 wherein a remaining waste stream is treated in solvent Z₂ at high temperature TB wherein residual organic components are carbonized to produce gas and carbon.

### Example A1: separating cellulose from a composite feed (Step 1A)

A composite feed comprising cellulose and a synthetic polymeric material such as PET, PVC, PP, which composite feed may originate from waste paper, cardboard, packaging, textiles or construction materials, is contacted with a Zinc Chloride molten salt solvent (Z₁) at a temperature TA of 50-90°C, whereby the cellulose part (CEL) is dissolved and separated by filtration from the synthetic polymeric part (hereafter also referred to as polymeric part).

The cellulose part (CEL) is thereafter treated to separate cellulose by precipitation from the Zinc Chloride molten salt solvent by adding an anti-solvent, preferably water. In this step Nano crystalline Cellulose NCC fibers are produced, which is a useful product in several applications as described above.

The diluted molten salt solvent is regenerated by heating and evaporating the anti-solvent, preferably water, to re-concentrate and re-use as solvent Z and to separate and re-use the anti-solvent. The molten salt solvent Z comprises organic contaminants, typically hydrocarbon or carbohydrate, typically including mono- or oligosaccharides from cellulose that is partially hydrolized in step 1A. This recycled and contaminated molten salt solvent Z is re-used as solvent in anyone of the process steps (Z₁, Z₂ or Z₃) preferably as solvent Z₂ or Z₃ step 1B and/or step 2 such that the organic contaminants are carbonized and removed in step 2 as described below.

### Example A2: Separating halogens from the polymeric part (Step 1B)

In (optional) step 1B the polymeric part from step 1A in Example A1 is treated in Zinc Chloride molten salt solvent Z₂ containing an excess of Zinc Oxide at temperatures in the range between 100 and 150°C. The Zinc-oxide reacts with halogens to form ZnCl₂ which forms part of the molten salt solvent. Bromides can be removed by addition of MgO to produce a MgBr₂ precipitate in the molten salt solvent that can be removed by filtration.

### Example A3: Carbonizing the polymeric part (Step 2)

In step 2 the polymeric part from step 1A in Example A1 is carbonized in the Zinc Chloride molten salt at temperatures in the range between 300 and 500°C forming mainly Hydrogen gas and a solid Carbon. The hetero atoms like Nitrogen and Sulphur are concentrated in the Carbon.

### Example A4: Carbonizing the treated polymeric part in Step 2

In step 2 the treated polymeric part from example A2 is carbonized in the Zinc Chloride molten salt at temperatures in the range of 300-500°C forming mainly Hydrogen gas and a solid Carbon. The hetero atoms like Nitrogen and Sulphur are concentrated in the Carbon.

### Example B1: Carbonizing both the polymeric and the cellulose part (Step 2)

In step 2 the polymeric part from example A1 is carbonized in the Zinc Chloride molten salt at temperatures in the range of 300-500°C Nanocellulose produced in the low temperature step (A1) is separated and added to the high temperature step as a seed to enhance formation of Carbon Fiber or Carbon Fiber precursor. The Carbon product produced in this step has different properties compared to the Carbon product produced in step A3 and A4 and is suitable to produce carbon fiber.

### Example C1: separating cellulose from bio-based material

A bio-based material containing hemi-cellulose, virgin cellulose comprising amorphous- and crystalline cellulose and lignin is contacted with a Zinc Chloride hydrate molten salt solvent at a temperature of 50-90°C, whereby the non-crystalline hemi cellulose and amorphous cellulose is dissolved and separated from the crystalline cellulose and lignin.

### Example C2: Carbonizing polymeric part and the cellulose/lignin part of biomass

The polymeric part from example A2 is carbonized in the Zinc Chloride molten salt at temperatures in the range of 300-500°C in the presence of the composite of crystalline cellulose and lignin as produced in Example C1.

### Example C3: Carbonizing cellulose/lignin part of biomass

The separated crystalline cellulose high aspect ratio nano-fibers and lignin as produced in Example C1 is carbonized in the presence of Zinc Chloride molten salt at temperatures in the range of 300-500°C thereby producing a Carbon Fiber material.

### Example D1: separating cellulose from a polycotton feed

A composite material of cellulose and a synthetic polymer, for example a Polycotton textile material comprising cotton fibers and synthetic polymer fibers, is treated with Zinc Chloride molten salt solvent at 50-90°C and the Cellulose part is dissolved and separated from the Polyester. In this process none of the two components is damaged. The Cellulose is separated from the Zinc Chloride by precipitation and the molten salt solvent is regenerated for re-use as described in example 1A. The separated cellulose solution can also be spun to fibers into a coagulation bath wherein the cellulose precipitates to produce regenerated cellulose filaments, fibers or yarns.

### Example D2: Re-using separated polyester part

The separated Polyester fibers from Example D1 is processed to produce regenerated polyester filaments, fibers or yarns for example to be re-used in production of Poly Cotton.

### Example D3: depolymerizing the polyester part

The separated Polyester from Example D1 is depolymerized into its monomer constituents so that it can be repolymerized to produce polyester and optionally polyester fibers to produce Poly Cotton.

### Example D4: carbonizing the polyester part

In step 2 the separated polyester part from step 1 in example D1 is carbonized in the Zinc Chloride molten salt at temperatures in the range between 300 and 500°C forming mainly Hydrogen gas and a solid Carbon. The hetero atoms like Nitrogen and Sulphur are concentrated in the Carbon.

### Example E1: separating cellulose from synthetic polymer coated cellulosic material

A waste stream comprising synthetic polymer coated cellulosic material, for example paper, cardboard, packaging, or a paper powder reinforced plastic composite materials (eg. MAPKA) comprise cellulose and a synthetic polymer (for example polyethylene terephthalate PET, polyethylene PE, polypropylene PP, polystyrene PS, etc). The waste stream is shredded and treated with Zinc Chloride molten salt solvent to dissolve and separate the Cellulose part as described above in example 1A without damaging either of the two components. Preferably in the shredded waste stream more than 90 wt% of the waste particles have a diameter below 1000 microns (1mm). To achieve a small size the waste material can be further milled after the shredding.

The diluted and contaminated Zinc Chloride solvent is regenerated to recycle solvent Z to be reused in the process as described above in example 1A, wherein the organic contaminants are carbonized in step 2.

### Example E2: Carbonizing the synthetic polymer part

Part or all of the separated synthetic polymer waste from step 1 in example E1 is carbonized in the Zinc Chloride molten salt solvent at temperatures in the range between 300 and 500°C forming mainly Hydrogen gas and a solid Carbon. The hetero atoms like Nitrogen and Sulphur are concentrated in the Carbon.

### Example E3:

Part or all of the separated synthetic polymer waste from step 1 in example E1 is mixed with the contaminated and diluted Zinc Chloride stream and thereafter heated to above 200°C. The Zinc Chloride stream is hereby regenerated, cleaned from organic species etc. and concentrated by removing water and any non-precipitated bio-based materials and the synthetic polymer residue are both carbonized forming Carbon and Gas that precipitate and evaporate from the Zinc Chloride molten salt solvent. The Zinc Chloride molten salt solvent can then be reused in anyone of the preceding stages, preferably after cooling in the first stage.

## Claims

1. A process for converting a waste material comprising cellulose and optional non-cellulosic material comprising the steps of
I. Contacting the waste material with a first molten salt solvent at a first temperature below 125°C preferably below 100°C and dissoluting the cellulose,
II. Separating the obtained cellulose solution into two fractions comprising
a) Fraction II.a) comprising a solution of cellulose in the molten salt solvent and optional dissolved non-cellulosic material,
b) Fraction II.b) comprising non-dissolved material,
III. Adding anti-solvent to precipitate cellulose from Fraction II.a and separating into
a) Fraction III.a) comprising precipitate cellulose,
b) Fraction III.b) comprising used first molten salt solvent comprising the salt, the anti-solvent, cellulose degradation products and optional dissolved non-cellulosic material,
IV. Preferably evaporating anti-solvent from Fraction Ill.b to form a concentrated molten salt Fraction Ill.bc,
V. Providing a carbonization feed comprising Fraction Ill.b or Fraction Ill.bc and/or Fraction II.b) and carbonizing said feed in a second molten salt solvent at a second temperature above 150°C, preferably above 200°C, more preferably above 300°C, and preferably lower than 600°C, more preferably lower than 500°C to form solid carbon and hydrogen,
VI. Separating the formed solid carbon to form
a) Fraction VI.a) comprising solid carbon,
b) Fraction VI.b) comprising the used second molten salt solvent.

2. The process of claim 1 wherein the first molten solvent is a molten metal salt, preferably a molten metal halide salt wherein the halide preferably is bromide or chloride and wherein the metal preferably is Zn, AL or Sb, and which is preferably chosen from the group consisting of ZnCl₂, ZnBr₂, AlCl₃, SbCl₃, their hydrates and the blends thereof, preferably a AlCl₃/SbCl₃ blend and most preferably a molten ZnCl₂ hydrate salt, preferably molten ZnCl₂.4H₂O comprising 40 - 90 wt.%, preferably 65 - 85 wt.% ZnCl₂ and wherein the second molten salt solvent preferably comprises the same molten salt as the first molten salt solvent and wherein preferably the second molten is a molten salt hydrate with lower water content than the first molten salt hydrate or wherein the second molten salt is an anhydrous molten salt and wherein optionally the first molten salt hydrate is formed in step I by adding a molten salt or a molten salt hydrate with a water content that is lower than the water content of the first molten salt hydrate and hydrating that with water contained in the waste material.

3. The process of claim 1 or 2 wherein the second molten salt solvent comprises the same salt as the first molten salt solvent wherein
- in step III) precipitating the dissolved Cellulose from the first molten salt solvent by adding anti-solvent,
- in step IV) heating Fraction Ill.b and evaporating the anti-solvent from Fraction Ill.b to form the concentrated used molten salt solvent Fraction Ill.bc, and
- in step V) further heating the concentrated used molten salt solvent Fraction Ill.bc, optionally mixed with the Fraction II.b), optionally with additional fresh molten salt to form the carbonization feed for carbonizing in step V) and
- optionally further comprising a step VII comprising recycling, after optional purification, the used second molten salt solvent for use as- or for use in the first or second molten salt solvent.

4. The process of claim 3 wherein the first molten salt solvent is molten ZnCl₂₋hydrate or ZnBr₂₋hydrate wherein
- in step III) the dissolved Cellulose is precipitated from the first molten salt solvent by diluting with water, preferably in an amount to dilute to a ZnCl₂ or ZnBr₂ concentration between 10 and 30 wt.% relative to the total weight of the molten salt and water and
- in step IV) evaporating the water, preferably at a temperature above 100°C, to form the concentrated molten salt Fraction Ill.bc.

5. The process of anyone of the preceding claims wherein in step I.a) the waste is first contacted with a molten salt solvent A which is an aqueous solution comprising 40 - 65 wt% ZnCl₂ in water, whereby the amorphous cellulose phase is preferentially dissolved over the crystalline cellulose phase having an XRD type I structure, and wherein in step I.b) the obtained crystalline cellulose having an XRD type I structure is contacted with molten salt solvent B comprising between 65 and 90 wt% ZnCl₂ in water to produce delaminated cellulose having an XRD type II structure, wherein the molten salt solvent B and preferably also the molten salt solvent A are free of proton acid and preferably comprise a proton scavenger and wherein the temperature in step I.a) and I.b) is preferably below 80°C, more below 70°C, 60°C or even below 50°C.

6. The process of anyone of the preceding claims wherein the carbonization feed in step V comprises heteroatoms from non-cellulosic material in the waste material feed or from cellulose degradation products, wherein at least part of the heteroatoms Nitrogen and Sulphur if present are concentrated in the carbon formed in step V and removed in step VI and wherein preferably also a reactant is added before or during carbonization step V to convert heteroatom-containing compounds to a reaction product that can be separated from the first or second molten salt solvent or both, wherein the reactant preferably reacts with the heteroatom compounds to form a salt that can be separated from the molten salt solvent, preferably by precipitation or by phase separation or, in case the second molten salt comprises a metal halogenide and the carbonization feed comprises non-cellulosic material comprising halogenide heteroatoms wherein the halogenide is the same halogenide as in the metal halogenide of the second molten salt solvent, the reactant preferably is a metal oxide wherein the metal is the same as the metal in the metal halogenide of the second molten salt solvent.

7. The process of claim 6 wherein the reactant is a metal compound, preferably a Metal, Metal Oxide or Metal hydroxide, more preferably Zinc Oxide, Magnesium Oxide, Iron Oxide or Nickel Oxide and wherein the formed heteroatom compounds comprise one or more of halogens, CO₂, SOₓ or NOₓ which react to form one or more of metal-halogenides, metal-carbonates, metal-sulfates, or metal- nitrates.

8. The process according to anyone of the preceding claims, wherein a solid carbon source or a precursor thereof is added to the carbonization feed in step V) as a carbonization seed wherein preferably the amount of solid carbon source or a precursor thereof is between 0.1 and 10 wt.%, preferably between 0.1 and 5 or 3 wt.% relative to the total weight of the carbonization feed.

9. The process according to anyone of the preceding claims, wherein the second molten metal salt solvent in step V) further comprises one or more dehydrogenation catalyst metals different from the metal in the molten salt, preferably chosen from the group of Ni, Fe, Cu or Zn, to enhance hydrogen yield in the process, preferably in the form of a metal-organic complex like metal-alkyls, metal-oxides or a metal-chloride complex and preferably in an amount of less than 10, preferably less than 5 or even less than 3 mole% of the metal in the molten salt and wherein optionally the dehydrogenation catalyst metals are supported on a solid carbon source or a precursor thereof.

10. The process according to claims 8 or 9, wherein the solid carbon source is carbon fiber, carbon nanofiber or carbon nanotube or carbonized plastic and wherein the precursor of a carbon source is lignin or cellulose or plastic, preferably the cellulose precipitate obtained in step III.a) of claim 1 and more preferably nano-crystalline cellulose obtained in claim 5, optionally in the form of spun or extruded nano-crystalline cellulose fibers.

11. The process according to any of the preceding claims, wherein the separated solid obtained in step VI.a is further processed in a separate step at temperatures above 800°C to enhance the formation of higher quality carbon materials.

12. The process according to any of the preceding claims, further comprising one or more process steps wherein the separated solid carbon is used to prepare carbon sol fertilizer, carbon black, carbon fibers, carbon nanofibers or precursors thereof.

13. The process according to any of the preceding claims, wherein the waste material feed comprises a biobased waste stream, preferably comprising wood, crop residues, manure, digestate or organic household waste, wherein the waste material feed is preferably dried before step I.

14. The process according to any of the preceding claims, wherein the waste material feed comprises cellulose and a plastic material, preferably comprising one or more waste materials from the list consisting of municipal plastic waste, plastic contaminated paper, polymer coated paper or cardboard, a composite material comprising paper reinforced plastic, a multilayer laminate of paper and polymer, a textile comprising fibers comprising cellulose and plastic fibers wherein plastic material is separated in step Il.b forming Fraction II.b) which is separated for re-use or is provided as part of the carbonization feed which is carbonized in step V.

15. The process according to any of the preceding claims, wherein the first molten salt solvent is a molten salt hydrate and the second molten salt solvent is the same molten salt with a lower water content than the first molten salt solvent or is substantially anhydrous, and wherein preferably
A- in case the carbonization feed comprises fraction Ill.b and/or fraction Il.b comprising lignin but substantially no plastic material, the carbonization temperature preferably is below 400°C, preferably below 350°C, more preferably below 300°C or even below 270°C, but most preferably between 300 and 400°C
or
B- in case the carbonization feed comprises fraction Il.b comprising plastic material, the second molten salt solvent comprises a lower water content than the first molten salt solvent or is substantially anhydrous and the carbonization temperature is higher than in case A and preferably above 300°C, more preferably above 350°C or even above 400°C, most preferably between 400 and 500 °C,
or
C- in case the carbonization feed comprises fraction Il.b comprising lignin and plastic material, the lignin and plastic material are either carbonized together as in case B or, more preferably, the plastic material is separated from the lignin, preferably by one or more methods using particle size and/or density difference between lignin and plastic material, and the lignin is carbonized as in case A and the plastic material is carbonized as in case B.

16. The process according to any of the preceding claims, wherein the waste material also comprises inorganic material and organic non-cellulosic material, preferably comprising synthetic polymers and/or biopolymers, wherein the waste material is contacted before and/or during step I with a molten salt solvent to dissolve the cellulose, whereby the inorganic material and organic non-cellulosic material are physically separated based on density wherein the inorganic material having a higher density than the molten salt solvent sinks and the organic non-cellulosic material having a lower density than the molten salt solvent floats.

## Patentansprüche

1. Verfahren zum Umwandeln eines Abfallmaterials, das Cellulose und optional Nichtcellulosematerial umfasst, umfassend die Schritte
I. Inkontaktbringen des Abfallmaterials mit einem ersten Salzschmelzenlösungsmittel bei einer ersten Temperatur unter 125 °C, bevorzugt unter 100 °C, und Auflösen der Cellulose,
II. Trennen der erlangten Celluloselösung in zwei Fraktionen, umfassend
a) Fraktion II.a), umfassend eine Lösung von Cellulose in dem Salzschmelzenlösungsmittel und optional gelöstes Nichtcellulosematerial,
b) Fraktion II.b), umfassend nicht gelöstes Material,
III. Zusetzen von Antilösungsmittel zur Fällung von Cellulose aus Fraktion Il.a und Trennen in
a) Fraktion III.a), umfassend gefällte Cellulose,
b) Fraktion III.b), umfassend verwendetes erstes Salzschmelzenlösungsmittel, umfassend das Salz, das Antilösungsmittel, Celluloseabbauprodukte und optional gelöstes Nichtcellulosematerial,
IV. bevorzugt Verdampfen von Antilösungsmittel aus Fraktion Ill.b zum Bilden einer konzentrierten Salzschmelzen-Fraktion III.bc,
V. Bereitstellen einer Karbonisierungsbeschickung, die Fraktion III.b oder Fraktion III.bc und/oder Fraktion II.b) umfasst, und Karbonisieren der Beschickung in einem zweiten Salzschmelzenlösungsmittel bei einer zweiten Temperatur oberhalb von 150 °C, bevorzugt oberhalb von 200 °C, bevorzugter oberhalb von 300 °C und bevorzugt unterhalb von 600 °C, bevorzugter unterhalb von 500 °C, zum Bilden von festem Kohlenstoff und Wasserstoff,
VI. Abtrennen des gebildeten festen Kohlenstoffs zum Bilden von
a) Fraktion VI.a), umfassend festen Kohlenstoff,
b) Fraktion VI.b), umfassend das verwendete zweite Salzschmelzenlösungsmittel.

2. Verfahren nach Anspruch 1, wobei das erste Schmelzenlösungsmittel ein Metallschmelzensalz, bevorzugt ein Metallschmelzenhalogenidsalz, ist, wobei das Halogenid bevorzugt Bromid oder Chlorid ist und wobei das Metall bevorzugt Zn, AL oder Sb ist und welches bevorzugt ausgewählt ist aus der Gruppe bestehend aus ZnCl₂, ZnBr₂, AlCl₃, SbCl₃, deren Hydraten und deren Mischungen, bevorzugt einer AlCl₃/SbCl₃-Mischung und am meisten bevorzugt einem geschmolzenen ZnCl₂-Hydratsalz, bevorzugt geschmolzenem ZnCl₂·4H₂O mit 40-90 Gew.-%, bevorzugt 65-85 Gew.-% ZnCl₂ und wobei das zweite Salzschmelzenlösungsmittel bevorzugt die gleiche Salzschmelze wie das erste Salzschmelzenlösungsmittel umfasst und wobei bevorzugt die zweite Schmelze eine Salzschmelze mit einem geringeren Wassergehalt als die erste Salzschmelze ist oder wobei die zweite Salzschmelze eine wasserfreie Salzschmelze ist und wobei optional das erste Salzschmelzenhydrat in Schritt I gebildet wird, indem eine Salzschmelze oder ein Salzschmelzenhydrat mit einem Wassergehalt, der niedriger ist als der Wassergehalt des ersten Salzschmelzenhydrats, zugesetzt und mit im Abfallmaterial enthaltenem Wasser hydratisiert wird.

3. Verfahren nach Anspruch 1 oder 2, wobei das zweite Salzschmelzenlösungsmittel das gleiche Salz wie das erste Salzschmelzenlösungsmittel umfasst, wobei
- in Schritt II) die gelöste Cellulose aus dem ersten Salzschmelzenlösungsmittel durch Zusetzen von Antilösungsmittel gefällt wird,
- in Schritt IV) die Fraktion III.b erwärmt wird und das Antilösungsmittel aus der Fraktion III.b verdampft wird, um die konzentrierte verwendete Salzschmelzenlösungsmittel-Fraktion III.bc zu bilden, und
- in Schritt V) die konzentrierte verwendete Salzschmelzenlösungsmittel-Fraktion III.bc, optional gemischt mit der Fraktion II.b), optional mit zusätzlicher frischer Salzschmelze, weiter erwärmt wird, um die Karbonisierungsbeschickung für die Karbonisierung in Schritt V) zu bilden, und
- optional ferner umfassend einen Schritt VII, umfassend das Recyceln, nach optionaler Reinigung, des verwendeten zweiten Salzschmelzenlösungsmittels zur Verwendung als erstes oder zweites Salzschmelzenlösungsmittel oder zur Verwendung in diesem.

4. Verfahren nach Anspruch 3, wobei das erste Salzschmelzenlösungsmittel geschmolzenes ZnCl₂·-Hydrat oder ZnBr₂·-Hydrat ist, wobei
- in Schritt III) die gelöste Cellulose aus dem ersten Salzschmelzenlösungsmittel durch Verdünnen mit Wasser gefällt wird, bevorzugt in einer Menge zur Verdünnung auf eine ZnCl₂-oder ZnBr₂-Konzentration zwischen 10 und 30 Gew.-%, bezogen auf das Gesamtgewicht der Salzschmelze und des Wassers, und
- in Schritt IV) das Wasser verdampft wird, bevorzugt bei einer Temperatur über 100 °C, zum Bilden der konzentrierten Salzschmelzen-Fraktion Ill.bc.

5. Verfahren nach einem der vorhergehenden Ansprüche, wobei in Schritt I.a) der Abfall zuerst mit einem Salzschmelzenlösungsmittel A in Kontakt gebracht wird, das eine wässrige Lösung ist, die 40-65 Gew.-% ZnCl₂ in Wasser umfasst, wobei die amorphe Cellulosephase bevorzugt gegenüber der kristallinen Cellulosephase mit einer XRD-Typ-I-Struktur gelöst wird und wobei in Schritt I.b) die erlangte kristalline Cellulose mit einer XRD-Typ-I-Struktur mit Salzschmelzenlösungsmittel B, das zwischen 65 und 90 Gew.-% ZnCl₂ in Wasser umfasst, in Kontakt gebracht wird, um delaminierte Cellulose mit einer XRD-Typ-II-Struktur herzustellen, wobei das Salzschmelzenlösungsmittel B und bevorzugt auch das Salzschmelzenlösungsmittel A frei von Protonensäure sind und bevorzugt einen Protonenfänger umfassen und wobei die Temperatur in Schritt I.a) und I.b) bevorzugt unter 80 °C, mehr bevorzugt unter 70 °C, 60 °C oder sogar unter 50 °C liegt.

6. Verfahren nach einem der vorhergehenden Ansprüche, wobei die Karbonisierungsbeschickung in Schritt V Heteroatome aus Nichtcellulosematerial in der Abfallmaterialbeschickung oder aus Celluloseabbauprodukten umfasst, wobei mindestens ein Teil der Heteroatome Stickstoff und Schwefel, falls vorhanden, in dem in Schritt V gebildeten Kohlenstoff konzentriert und in Schritt VI entfernt wird und wobei bevorzugt auch ein Reaktant vor oder während des Karbonisierungsschritts V zugesetzt wird, um heteroatomhaltige Verbindungen in ein Reaktionsprodukt umzuwandeln, das von dem ersten oder dem zweiten Salzschmelzenlösungsmittel oder beiden abgetrennt werden kann, wobei der Reaktant bevorzugt mit den Heteroatomverbindungen reagiert, um ein Salz zu bilden, das von dem Salzschmelzenlösungsmittel abgetrennt werden kann, bevorzugt durch Fällung oder durch Phasentrennung oder, falls die zweite Salzschmelze ein Metallhalogenid umfasst und die Karbonisierungsbeschickung Nichtcellulosematerial umfasst, das Halogenid-Heteroatome umfasst, wobei das Halogenid das gleiche Halogenid ist wie in dem Metallhalogenid des zweiten Salzschmelzenlösungsmittels, der Reaktant bevorzugt ein Metalloxid ist, wobei das Metall das gleiche ist wie das Metall in dem Metallhalogenid des zweiten Salzschmelzenlösungsmittels.

7. Verfahren nach Anspruch 6, wobei der Reaktant eine Metallverbindung, bevorzugt ein Metall, Metalloxid oder Metallhydroxid, bevorzugter Zinkoxid, Magnesiumoxid, Eisenoxid oder Nickeloxid ist und wobei die gebildeten Heteroatomverbindungen eines oder mehrere von Halogenen, CO₂, SOₓ oder NOₓ umfassen, die zur Bildung von einem oder mehreren von Metallhalogeniden, Metallcarbonaten, Metallsulfaten oder Metallnitraten reagieren.

8. Verfahren nach einem der vorhergehenden Ansprüche, wobei der Karbonisierungsbeschickung in Schritt V) eine feste Kohlenstoffquelle oder ein Vorläufer davon als Karbonisierungskeim zugesetzt wird, wobei bevorzugt die Menge an fester Kohlenstoffquelle oder einem Vorläufer davon zwischen 0,1 und 10 Gew.-%, bevorzugt zwischen 0,1 und 5 oder 3 Gew.- %, bezogen auf das Gesamtgewicht der Karbonisierungsbeschickung, liegt.

9. Verfahren nach einem der vorhergehenden Ansprüche, wobei das zweite Metallsalzschmelzenlösungsmittel in Schritt V) ferner ein oder mehrere Dehydrierungskatalysatormetalle umfasst, die sich von dem Metall in der Salzschmelze unterscheiden, bevorzugt ausgewählt aus der Gruppe Ni, Fe, Cu oder Zn, um die Wasserstoffausbeute in dem Verfahren zu erhöhen, bevorzugt in Form eines metallorganischen Komplexes wie Metallalkylen, Metalloxiden oder eines Metallchloridkomplexes, und bevorzugt in einer Menge von weniger als 10, bevorzugt weniger als 5 oder sogar weniger als 3 Mol-% des Metalls in der Salzschmelze, und wobei optional die Dehydrierungskatalysatormetalle auf einer festen Kohlenstoffquelle oder einem Vorläufer davon getragen werden.

10. Verfahren nach Anspruch 8 oder 9, wobei die feste Kohlenstoffquelle Kohlenstofffaser, Kohlenstoffnanofaser oder Kohlenstoffnanoröhre oder karbonisierter Kunststoff ist und wobei der Vorläufer einer Kohlenstoffquelle Lignin oder Cellulose oder Kunststoff, bevorzugt das in Schritt III.a) in Anspruch 1 erlangte Cellulosefällungsprodukt und bevorzugter nanokristalline Cellulose, erlangt in Anspruch 5, optional in Form von gesponnenen oder extrudierten nanokristallinen Cellulosefasern, ist.

11. Verfahren nach einem der vorhergehenden Ansprüche, wobei der in Schritt VI.a erlangte abgetrennte Feststoff in einem getrennten Schritt bei Temperaturen über 800 °C weiterverarbeitet wird, um die Bildung von Kohlenstoffmaterialien höherer Qualität zu verbessern.

12. Verfahren nach einem der vorhergehenden Ansprüche, ferner umfassend einen oder mehrere Verfahrensschritte, wobei der abgetrennte feste Kohlenstoff zur Herstellung von Kohlenstoffbodendünger, Ruß, Kohlenstofffasern, Kohlenstoffnanofasern oder Vorläufern davon verwendet wird.

13. Verfahren nach einem der vorhergehenden Ansprüche, wobei die Abfallmaterialbeschickung einen biobasierten Abfallstrom umfasst, bevorzugt umfassend Holz, Ernterückstände, Gülle, Gärreste oder organischen Hausmüll, wobei die Abfallmaterialbeschickung bevorzugt vor Schritt I getrocknet wird.

14. Verfahren nach einem der vorhergehenden Ansprüche, wobei die Abfallmaterialbeschickung Cellulose und ein Kunststoffmaterial umfasst, bevorzugt umfassend ein oder mehrere Abfallmaterialien aus der Liste bestehend aus kommunalem Kunststoffabfall, kunststoffkontaminiertem Papier, polymerbeschichtetem Papier oder Karton, einem Verbundmaterial umfassend papierverstärkten Kunststoff, einem mehrschichtigen Laminat aus Papier und Polymer, einem Textil umfassend Fasern umfassend Cellulose und Kunststofffasern, wobei Kunststoffmaterial in Schritt II.b abgetrennt wird und die Fraktion II.b) gebildet wird, die zur Wiederverwendung abgetrennt wird oder als Teil der Karbonisierungsbeschickung, die in Schritt V karbonisiert wird, bereitgestellt wird.

15. Verfahren nach einem der vorhergehenden Ansprüche, wobei das erste Salzschmelzenlösungsmittel ein Salzschmelzenhydrat ist und das zweite Salzschmelzenlösungsmittel die gleiche Salzschmelze mit einem geringeren Wassergehalt als das erste Salzschmelzenlösungsmittel ist oder im Wesentlichen wasserfrei ist und wobei bevorzugt
A- falls die Karbonisierungsbeschickung Fraktion III.b und/oder Fraktion Il.b umfasst, die Lignin, aber im Wesentlichen kein Kunststoffmaterial umfassen, die Karbonisierungstemperatur bevorzugt unter 400 °C, bevorzugt unter 350 °C, bevorzugter unter 300 °C oder sogar unter 270 °C, aber am meisten bevorzugt zwischen 300 und 400 °C liegt,
oder
B- falls die Karbonisierungsbeschickung Fraktion II.b umfasst, die Kunststoffmaterial umfasst, das zweite Salzschmelzenlösungsmittel einen geringeren Wassergehalt aufweist als das erste Salzschmelzenlösungsmittel oder im Wesentlichen wasserfrei ist und die Karbonisierungstemperatur höher ist als im Fall A und bevorzugt über 300 °C, bevorzugter über 350 °C oder sogar über 400 °C, am meisten bevorzugt zwischen 400 und 500 °C liegt,
oder
C- falls die Karbonisierungsbeschickung Fraktion Il.b umfasst, die Lignin und Kunststoffmaterial umfasst, das Lignin und das Kunststoffmaterial entweder zusammen karbonisiert werden wie in Fall B oder, bevorzugter, das Kunststoffmaterial von dem Lignin abgetrennt wird, bevorzugt durch ein oder mehrere Verfahren unter Verwendung von Partikelgrößen- und/oder Dichteunterschieden zwischen Lignin und Kunststoffmaterial, und das Lignin wie in Fall A karbonisiert wird und das Kunststoffmaterial wie in Fall B karbonisiert wird.

16. Verfahren nach einem der vorhergehenden Ansprüche, wobei das Abfallmaterial auch anorganisches Material und organisches Nichtcellulosematerial umfasst, bevorzugt umfassend synthetische Polymere und/oder Biopolymere, wobei das Abfallmaterial vor und/oder während Schritt I mit einem Salzschmelzenlösungsmittel in Kontakt gebracht wird, um die Cellulose aufzulösen, wobei das anorganische Material und das organische Nichtcellulosematerial physikalisch basierend auf der Dichte getrennt werden, wobei das anorganische Material mit einer höheren Dichte als das Salzschmelzenlösungsmittel absinkt und das organische Nichtcellulosematerial mit einer geringeren Dichte als das Salzschmelzenlösungsmittel schwimmt.

## Revendications

1. Procédé de conversion d'un matériau de déchet comprenant de la cellulose et éventuellement un matériau non cellulosique, comprenant les étapes suivantes :
I. la mise en contact du matériau de déchet avec un premier solvant de sel fondu à une première température inférieure à 125 °C, de préférence inférieure à 100 °C, et la dissolution de la cellulose,
II. la séparation de la solution de cellulose obtenue en deux fractions comprenant
a) une fraction II.a) comprenant une solution de cellulose dans le solvant de sel fondu et éventuellement du matériau non cellulosique dissous,
b) une fraction II.b) comprenant du matériau non dissous,
III. l'ajout d'anti-solvant pour précipiter la cellulose de la fraction Il.a et la séparation en
a) une fraction III.a) comprenant de la cellulose précipitée,
b) une fraction III.b) comprenant le premier solvant de sel fondu utilisé comprenant le sel, l'anti-solvant, des produits de dégradation de la cellulose et éventuellement du matériau non cellulosique dissous,
IV. de préférence, l'évaporation de l'anti-solvant de la fraction Ill.b pour former une fraction Ill.bc de sel fondu concentré,
V. la fourniture d'une charge de carbonisation comprenant la fraction Ill.b ou la fraction Ill.bc et/ou la fraction II.b) et la carbonisation de ladite charge dans un deuxième solvant de sel fondu à une deuxième température supérieure à 150 °C, de préférence supérieure à 200 °C, plus préférentiellement supérieure à 300 °C, et de préférence inférieure à 600 °C, plus préférentiellement inférieure à 500 °C pour former du carbone solide et de l'hydrogène,
VI. la séparation du carbone solide formé pour former
a) une fraction VI.a) comprenant du carbone solide,
b) une fraction VI.b) comprenant le deuxième solvant de sel fondu utilisé.

2. Procédé selon la revendication 1 dans lequel le premier solvant fondu est un sel métallique fondu, de préférence un sel d'halogénure métallique fondu dans lequel l'halogénure est de préférence un bromure ou un chlorure et dans lequel le métal est de préférence Zn, Al ou Sb, et qui est de préférence choisi dans le groupe constitué par ZnCl₂, ZnBr₂, AlCl₃, SbCl₃, leurs hydrates et leurs mélanges, de préférence un mélange AlCl₃/SbCl₃ et le plus préférentiellement un sel d'hydrate de ZnCl₂ fondu, de préférence ZnCl₂·4H₂O fondu comprenant 40 à 90 % en poids, de préférence 65 à 85 % en poids de ZnCl₂ et dans lequel le deuxième solvant de sel fondu comprend de préférence le même sel fondu que le premier solvant de sel fondu et dans lequel, de préférence, le deuxième sel fondu est un hydrate de sel fondu avec une teneur en eau inférieure à celle du premier hydrate de sel fondu ou dans lequel le deuxième sel fondu est un sel fondu anhydre et dans lequel, éventuellement, le premier hydrate de sel fondu est formé à l'étape I par ajout d'un sel fondu ou d'un hydrate de sel fondu ayant une teneur en eau qui est inférieure à la teneur en eau du premier hydrate de sel fondu et en l'hydratant avec de l'eau contenue dans le matériau de déchet.

3. Procédé selon la revendication 1 ou 2, dans lequel le deuxième solvant de sel fondu comprend le même sel que le premier solvant de sel fondu et dans lequel
- à l'étape III, la précipitation de la cellulose dissoute à partir du premier solvant de sel fondu par ajout d'anti-solvant,
- à l'étape IV, le chauffage de la fraction Ill.b et l'évaporation de l'anti-solvant de la fraction Ill.b pour former la fraction Ill.bc de solvant de sel fondu utilisé concentré, et
- à l'étape V, le chauffage supplémentaire de la fraction Ill.bc de solvant de sel fondu utilisé concentré, éventuellement mélangée à la fraction II.b), éventuellement avec du sel fondu frais supplémentaire pour former la charge de carbonisation pour la carbonisation à l'étape V) et
- comprenant éventuellement en outre une étape VII comprenant le recyclage, après éventuelle purification, du deuxième solvant de sel fondu utilisé pour utilisation en tant que ou pour utilisation dans le premier ou deuxième solvant de sel fondu.

4. Procédé selon la revendication 3, dans lequel le premier solvant de sel fondu est de l'hydrate de ZnCl₂ ou de l'hydrate de ZnBr₂ fondu, dans lequel
- à l'étape III), la cellulose dissoute est précipitée à partir du premier solvant de sel fondu par dilution avec de l'eau, de préférence en une quantité pour diluer à une concentration de ZnCl₂ ou de ZnBr₂ entre 10 et 30 % en poids par rapport au poids total du sel fondu et de l'eau, et
- à l'étape IV), l'évaporation de l'eau, de préférence à une température supérieure à 100 °C, pour former la fraction Ill.bc de sel fondu concentré.

5. Procédé selon l'une quelconque des revendications précédentes, dans lequel, à l'étape I.a), le déchet est d'abord mis en contact avec un solvant de sel fondu A qui est une solution aqueuse comprenant 40 à 65 % en poids de ZnCl₂ dans de l'eau, la phase de cellulose amorphe étant dissoute de préférence à la phase de cellulose cristalline ayant une structure XRD de type I, et dans lequel, à l'étape I.b) la cellulose cristalline obtenue ayant une structure XRD de type I est mise en contact avec un solvant de sel fondu B comprenant entre 65 et 90 % en poids de ZnCl₂ dans de l'eau pour produire une cellulose délaminée ayant une structure XRD de type II, dans lequel le solvant de sel fondu B et de préférence également le solvant de sel fondu A sont exempts d'acide protonique et comprennent de préférence un piégeur de protons et dans lequel la température aux étapes I.a) et I.b) est de préférence inférieure à 80 °C, plus précisément inférieure à 70 °C, 60 °C ou même inférieure à 50 °C.

6. Procédé selon l'une quelconque des revendications précédentes, dans lequel la charge de carbonisation à l'étape V comprend des hétéroatomes provenant de matériau non cellulosique dans la charge de matériau de déchet ou de produits de dégradation de la cellulose, dans lequel au moins une partie des hétéroatomes azote et soufre s'ils sont présents est concentrée dans le carbone formé à l'étape V et éliminée à l'étape VI et dans lequel, de préférence, un réactif est également ajouté avant ou pendant l'étape de carbonisation V pour convertir les composés contenant des hétéroatomes en un produit de réaction qui peut être séparé du premier ou du deuxième solvant de sel fondu ou des deux, dans lequel le réactif réagit de préférence avec les composés à hétéroatomes pour former un sel qui peut être séparé du solvant de sel fondu, de préférence par précipitation ou par séparation de phases ou, dans le cas où le deuxième sel fondu comprend un halogénure métallique et où la charge de carbonisation comprend du matériau non cellulosique comprenant des hétéroatomes d'halogénure dans lequel l'halogénure est le même halogénure que dans l'halogénure métallique du deuxième solvant de sel fondu, le réactif est de préférence un oxyde métallique dans lequel le métal est le même que le métal dans l'halogénure métallique du deuxième solvant de sel fondu.

7. Procédé selon la revendication 6, dans lequel le réactif est un composé métallique, de préférence un métal, un oxyde métallique ou un hydroxyde métallique, plus préférentiellement de l'oxyde de zinc, de l'oxyde de magnésium, de l'oxyde de fer ou de l'oxyde de nickel, et dans lequel les composés à hétéroatomes formés comprennent un ou plusieurs parmi les halogènes, CO₂, SO_{X} ou NO_{X} qui réagissent pour former un ou plusieurs parmi des halogénures métalliques, des carbonates métalliques, des sulfates métalliques ou des nitrates métalliques.

8. Procédé selon l'une quelconque des revendications précédentes, dans lequel une source de carbone solide ou un précurseur de celle-ci est ajouté à la charge de carbonisation à l'étape V) en tant que graine de carbonisation, dans lequel la quantité de source de carbone solide ou de précurseur de celle-ci se situe de préférence entre 0,1 et 10 % en poids, de préférence entre 0,1 et 5 ou 3 % en poids par rapport au poids total de la charge de carbonisation.

9. Procédé selon l'une quelconque des revendications précédentes, dans lequel le deuxième solvant de sel métallique fondu à l'étape V) comprend en outre un ou plusieurs métaux catalyseurs de déshydrogénation différents du métal dans le sel fondu, de préférence choisis dans le groupe de Ni, Fe, Cu ou Zn, afin d'améliorer le rendement en hydrogène dans le procédé, de préférence sous la forme d'un complexe métal-organique comme des alkyles métalliques, des oxydes métalliques ou un complexe métal-chlorure et de préférence en une quantité inférieure à 10, de préférence inférieure à 5 ou même inférieure à 3 % en moles du métal dans le sel fondu et dans lequel les métaux catalyseurs de déshydrogénation sont éventuellement supportés sur une source de carbone solide ou un précurseur de celle-ci.

10. Procédé selon la revendication 8 ou 9, dans lequel la source de carbone solide est une fibre de carbone, une nanofibre de carbone ou un nanotube de carbone ou un plastique carbonisé et dans lequel le précurseur d'une source de carbone est la lignine ou la cellulose ou le plastique, de préférence le précipité de cellulose obtenu à l'étape III.a) selon la revendication 1 et plus préférentiellement la cellulose nanocristalline obtenue dans la revendication 5, éventuellement sous la forme de fibres de cellulose nanocristalline filées ou extrudées.

11. Procédé selon l'une quelconque des revendications précédentes, dans lequel le solide séparé obtenu à l'étape VI.a est davantage traité dans une étape séparée à des températures supérieures à 800 °C afin d'améliorer la formation de matériaux de carbone de plus haute qualité.

12. Procédé selon l'une quelconque des revendications précédentes, comprenant en outre une ou plusieurs étapes de traitement dans lesquelles le carbone solide séparé est utilisé pour préparer un engrais sol carbone, du noir de carbone, des fibres de carbone, des nanofibres de carbone ou des précurseurs de ceux-ci.

13. Procédé selon l'une quelconque des revendications précédentes, dans lequel la charge de matériau de déchet comprend un flux de déchet biosourcé, comprenant de préférence du bois, des résidus de culture, du fumier, du digestat ou des déchets ménagers organiques, dans lequel la charge de matériau de déchet est de préférence séchée avant l'étape I.

14. Procédé selon l'une quelconque des revendications précédentes, dans lequel la charge de matériau de déchet comprend de la cellulose et un matériau plastique, comprenant de préférence un ou plusieurs matériaux de déchets de la liste constituée par les déchets plastiques municipaux, le papier contaminé par du plastique, le papier ou le carton enduit de polymère, un matériau composite comprenant du plastique renforcé de papier, un stratifié multicouche de papier et de polymère, un textile comprenant des fibres de cellulose et des fibres plastiques, dans lequel le matériau plastique est séparé à l'étape Il.b pour former la fraction II.b) qui est séparée pour être réutilisée ou qui est fournie en tant que partie de la charge de carbonisation, qui est carbonisée à l'étape V.

15. Procédé selon l'une quelconque des revendications précédentes, dans lequel le premier solvant de sel fondu est un hydrate de sel fondu et le deuxième solvant de sel fondu est le même sel fondu ayant une teneur en eau inférieure à celle du premier solvant de sel fondu ou est essentiellement anhydre, et dans lequel de préférence
A- dans le cas où la charge de carbonisation comprend la fraction Ill.b et/ou la fraction Il.b comprenant de la lignine mais essentiellement pas de matériau plastique, la température de carbonisation est de préférence inférieure à 400 °C, de préférence inférieure à 350 °C, plus préférentiellement inférieure à 300 °C ou même inférieure à 270 °C, mais le plus préférentiellement entre 300 et 400 °C
ou
B- dans le cas où la charge de carbonisation comprend la fraction Il.b comprenant du matériau plastique, le deuxième solvant de sel fondu comprend une teneur en eau inférieure à celle du premier solvant de sel fondu ou est essentiellement anhydre et la température de carbonisation est plus élevée que dans le cas A et de préférence supérieure à 300 °C, plus préférentiellement supérieure à 350 °C ou même supérieure à 400 °C, le plus préférentiellement entre 400 et 500 °C,
ou
C- dans le cas où la charge de carbonisation comprend la fraction II.b comprenant de la lignine et du matériau plastique, la lignine et le matériau plastique sont carbonisés ensemble comme dans le cas B ou, plus préférentiellement, le matériau plastique est séparé de la lignine, de préférence par une ou plusieurs méthodes utilisant la différence de taille de particules et/ou de densité entre la lignine et le matériau plastique, et la lignine est carbonisée comme dans le cas A et le matériau plastique est carbonisé comme dans le cas B.

16. Procédé selon l'une quelconque des revendications précédentes, dans lequel le matériau de déchet comprend également du matériau inorganique et du matériau organique non cellulosique, comprenant de préférence des polymères synthétiques et/ou des biopolymères, dans lequel le matériau de déchet est mis en contact avant et/ou pendant l'étape I avec un solvant de sel fondu pour dissoudre la cellulose, le matériau inorganique et le matériau organique non cellulosique sont physiquement séparés sur la base de leur densité, le matériau inorganique qui a une densité supérieure à celle du solvant de sel fondu coulant et le matériau organique non cellulosique qui a une densité inférieure à celle du solvant de sel fondu flottant.
